# EUROPEAN PATENT SPECIFICATION

(11) **EP 4 079 143 B1**
(45) Date of publication and mention of the grant of the patent: **12.11.2025**
(21) Application number: 22168887.2
(22) Date of filing: 19.04.2022
(51) Int. Cl.: A01G 9/02

(54) **KIT FOR ATTACHING PLANTS TO A WALL**
KIT ZUR BEFESTIGUNG VON PFLANZEN AN EINER WAND
KIT POUR FIXER DES PLANTES A UN MUR

(30) Priority: 22.04.2021 IT 202100010136
(43) Date of publication of application: 26.10.2022
(73) Proprietor: Lightgreen S.r.l., 20836 Briosco MB (IT)
(72) Inventor: Rossini, Matteo, 20836 Briosco (IT)
(74) Representative: Perani & Partners S.p.A.

(56) References cited:
- CN-A- 106 171 620
- CN-A- 108 184 485
- FR-A1- 3 053 210
- IT-A1- RM20 120 527
- KR-A- 20200 087 508
- US-A1- 2016 050 856

## Description

The present invention relates to a kit for attaching plants to a wall, in particular vertical but also inclined. Such kit may be used to arrange greenery on any type of wall, e.g. indoors or on building facades.

It is known in the state of the art to decorate buildings and rooms with plants, moss, shrubs, creepers or the like. These plants are usually placed in vases, which are attached in various ways to the walls to be decorated. In recent times, decoration using plants has attracted considerable interest, in particular aimed at improving ecofriendliness and environmental sustainability in civil construction.

The content of document US 2016/050856 A1 also forms part of the prior art. This document shows an expandable vertical garden system comprising a frame; drip irrigation pipes; drainage pipes; a drain tray; and optionally pots or plant containers.

Disadvantageously, once in place, a "green" covering has remarkable maintenance issues, mainly regarding irrigation. In the state of the art there exists no standard solution, but the problem is solved from time to time by ad hoc solutions, which are often sub-optimal. In particular, the irrigation systems, being visible, compromise the aesthetics of the covering.

### SUMMARY OF THE INVENTION

In this context, the technical task underlying the present invention is to provide a kit for attaching plants which obviates the drawbacks of the prior art as described above.

In particular, it is an object of the present invention to make available a kit for attaching plants that is simple, modular and capable of concealing the components of the irrigation system from view.

The defined technical task and the specified objects are substantially achieved by a kit for attaching plants comprising the technical characteristics set forth in independent claim 1.

### LIST OF FIGURES

Further features and advantages of the present invention will become more apparent from the approximate and thus non-limiting description of a preferred, but non-exclusive, embodiment of a kit for attaching plants, as shown in the accompanying drawings, wherein:
- Figure 1 is an exploded perspective view of a first embodiment of a kit for attaching plants according to the present invention;
- Figure 2 is a front view of a support panel of the kit in Figure 1;
- Figure 3 is a front view of a plurality of support panels of Figure 2, placed side by side; and
- Figure 4 is a perspective view of a second embodiment of a kit for attaching plants according to the present invention.

### DETAILED DESCRIPTION

With reference to the appended figures, 1 denotes a kit for attaching plants to a wall according to the present invention.

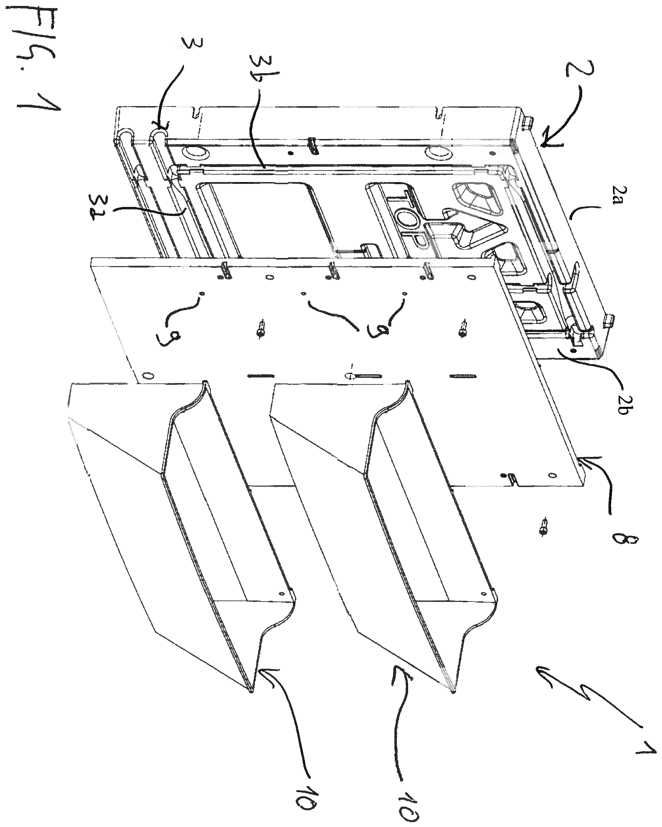

The kit 1, shown as assembled in Figure 1, includes a main panel 2 fixable to a wall (not shown). Such a panel 2 has a rectangular or square shape and, in use, is arranged substantially vertically.

More in detail, the support panel 2 has a rear surface 2a that can be connected to a wall and a front surface 2b opposite the rear surface 2a, therefore facing the environment.

According to the present invention, at least one channel 3, 4 is obtained in the support panel 2. In particular, the channel 3, 4 is obtained on the front surface 2b, so as to be accessible once the support panel 2 is attached to the wall. Such channel 3, 4 is suitable for housing a plant irrigation or drainage pipe 5, 6. More details on the pipes 5, 6 that can be associated with the kit 1 will be given hereinafter in this description. In an alternative embodiment, not shown, the channels 3, 4 may be attached at the rear surface 2a of the support panel 2, so as to remain concealed. This solution is suitable for the domestic version of the panel, particularly when it is composed of only one element.

More specifically, the kit 1 includes at least one delivery channel 3 and one drainage channel 4. In use, the delivery channel 3 houses a delivery pipe 5. Similarly, the drainage channel 4 is arranged to contain a drainage pipe 6. Such channels 3, 4 are at least partially distinct from each other.

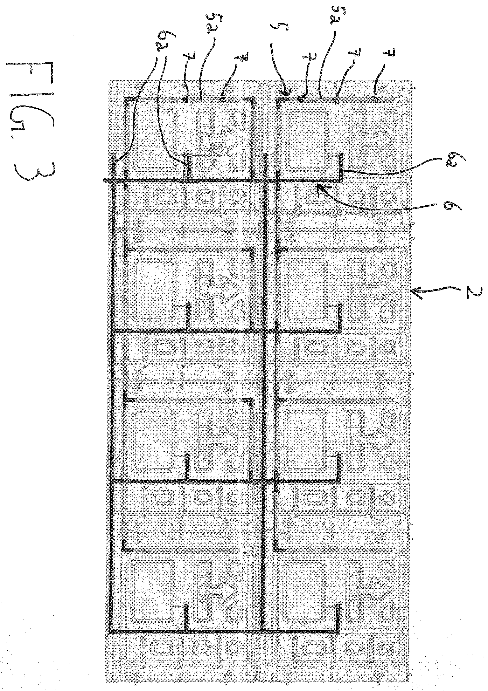

In further detail, the delivery channel 3 comprises a main delivery channel 3a, in particular arranged horizontally. Such main channel 3a runs throughout the width of the support panel so that, in use, a single channel may be defined by placing several support panels 2 side by side. The delivery channel 3 also comprises a delivery branch 3b, which can be associated with at least one vase 10. The delivery branch 3b is connected to the main delivery channel 3a, and extends in particular along a vertical direction as shown for example in Figure 3.

Optionally, the kit 1 comprises a delivery pipe 5, which can be inserted into the delivery channel 3 and connected in fluid communication with a water source. In use, the delivery pipe 5 extends along the main delivery channel 3a of several support panels 2. Within each support panel 2, the delivery pipe 5 extends with an irrigation portion 5a within the delivery branch 3b of the delivery channel 3. One or more irrigation openings 7 are obtained in the irrigation portion 5a, and can each be associated with a respective vase 10.

The drainage channel 4 has a main drainage channel 4a, in particular vertically arranged. It is worth noting that the main drainage channel 4a runs throughout the entire height of the support panel 2 and therefore, in use, it is possible to define a single channel by overlapping several support panels 2. The drainage channel 4 further comprises one or more drainage branches 4b, which can be associated with at least one vase 10. Each drainage branch 4b extends horizontally, and is connected to the main drainage channel 4a, as shown for example in Figure 3.

Optionally, the kit 1 includes a drainage pipe 6, which can be inserted into the drainage channel 4 and connected in fluid communication with a water source. In use the drainage pipe 6 extends along the main drainage channel 4a of several support panels 2. Within each support panel 2, the drainage pipe 6 extends with a collection portion 6a within each drainage branch 4b of the drainage channel 4. Each collection portion 6a can be connected to a respective vase 10.

In the preferred embodiment of the invention, the drainage pipe 6 is placed in fluid communication with the delivery pipe 5. Advantageously, the water drained from vases 10 is thereby reintroduced into the delivery pipe 5, reducing the water consumption of the irrigation system. In addition, this allows to remove the vases even when they are filled and to reposition them with some ease.

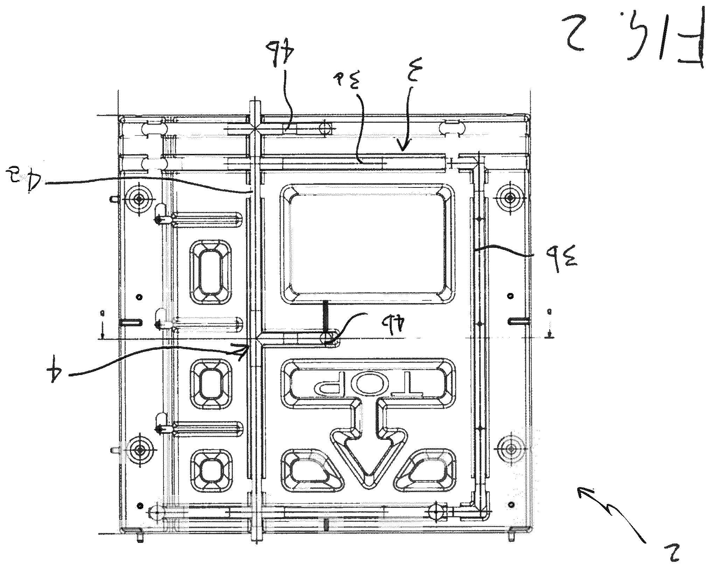

In the embodiment shown in Figures 1-3, the kit 1 comprises a cover panel 8, which is arranged to receive and support a vegetable, i.e. a plant or moss. The cover panel 8 can be attached to the support panel 2, in particular it has substantially the same dimensions as the support panel 2 to close the channels 3, 4 described above. In particular, the cover panel 8 is placed to cover the front surface 2b of the support panel 2.

As shown for example in Figure 1, the kit 1 comprises at least one vase 10, which can be attached to the cover panel 8. The cover panel 8 has a series of holes 9 which, in use, allow the water coming out of the delivery pipe 5 to flow into the vases 10.

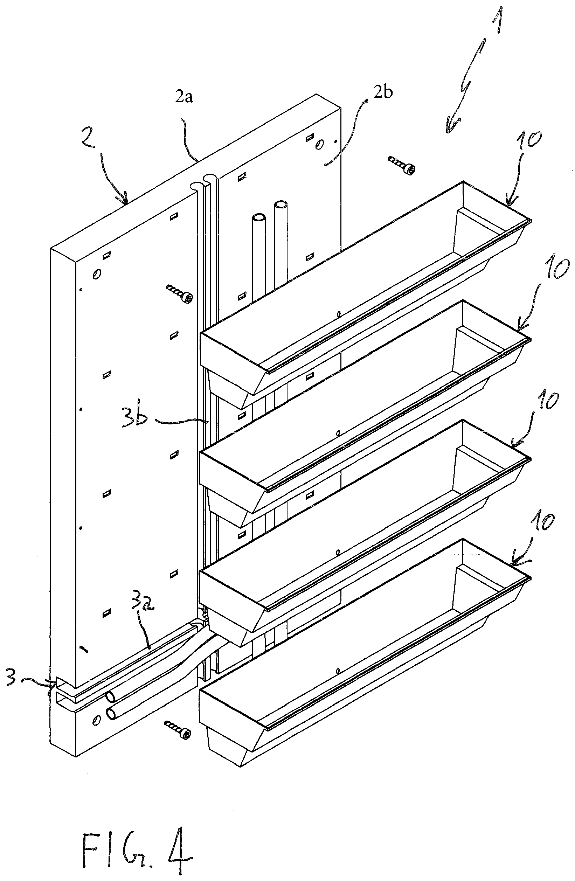

In an alternative embodiment, shown in Figure 4, the kit 1 does not comprise the cover panel 8. In this case, the vases 10 are attached directly to the support panel 2.

According to an alternative embodiment of the invention, not shown, the cover panel 8 does not hold vases 10, but is itself made of biocompatible material, preferably polymeric, and is therefore suitable for supporting moss growth.

## Claims

1. Kit (1) for attaching a plant to a wall, comprising a support panel (2) fixable to a wall and configured to support a plant; at least a delivery channel (3) and a drainage channel (4) within the support panel (2) and suitable for housing a delivery pipe (5) and a drainage pipe (6) respectively, said channels (3, 4) being at least partially distinct from each other; **characterized in that** the delivery channel (3) comprises a delivery branch (3b), which is configured to be associated with at least one vase (10); the drainage channel (4) comprising at least a drainage branch (4b) that is configured to be associated with a respective vase (10).

2. Kit (1) according to the preceding claim, **characterized in that** it comprises a cover panel (8) suitable for receiving and supporting a plant, said cover panel (8) being fixable to said support panel (2); the support panel (2) having a rear surface (2a) connectable to a wall and a front surface (2b) opposite to the rear surface (2a), said cover panel (8) being suitable for supporting said plant and placed to cover the front surface (2b).

3. Kit (1) according to the preceding claim, **characterized in that** said cover panel (8) is made of biocompatible material, preferably polymeric and suitable for supporting moss growth.

4. Kit (1) according to claim 2, **characterized in that** it comprises at least a vase (10) fixable to said cover panel (8).

5. Kit (1) according to any one of the preceding claims, **characterized in that** it comprises at least a delivery pipe (5) and a drainage pipe (6) respectively insertable within the delivery channel (3) and the drainage channel (4) respectively, said delivery pipe (5) being connectable in fluid communication with a water source.

6. Kit (1) according to the preceding claim, **characterized in that** the drainage pipe (6) is in fluid communication with the delivery pipe (5) to reintroduce the water drained by said plants into the delivery pipe (5).

## Patentansprüche

1. Bausatz (1) zum Anbringen einer Pflanze an einer Wand, umfassend eine Trägerplatte (2), die an einer Wand befestigbar und zur Aufnahme einer Pflanze ausgestaltet ist; mindestens einen Zufuhrkanal (3) und einen Drainagekanal (4) innerhalb der Trägerplatte (2) und geeignet zur Aufnahme jeweils eines Zufuhrrohrs (5) und eines Drainagerohrs (6), wobei die Kanäle (3, 4) zumindest teilweise voneinander getrennt sind; **dadurch gekennzeichnet, dass** der Zufuhrkanal (3) einen Zufuhrzweig (3b) umfasst, der dazu ausgestaltet ist, mit mindestens einem Pflanzgefäß (10) verbunden zu werden; wobei der Drainagekanal (4) mindestens einen Drainagezweig (4b) umfasst, der dazu ausgestaltet ist, mit einem jeweiligen Pflanzgefäß (10) verbunden zu werden.

2. Bausatz (1) nach dem vorhergehenden Anspruch, **dadurch gekennzeichnet, dass** er eine Abdeckplatte (8) umfasst, die zur Aufnahme und Unterstützung einer Pflanze geeignet ist, wobei die Abdeckplatte (8) an der Trägerplatte (2) befestigbar ist; wobei die Trägerplatte (2) eine Rückseite (2a) aufweist, die mit einer Wand verbindbar ist, und eine Vorderseite (2b) gegenüber der Rückseite (2a), wobei die Abdeckplatte (8) dazu geeignet ist, die Pflanze zu tragen und so platziert ist, dass sie die Vorderseite (2b) abdeckt.

3. Bausatz (1) nach dem vorhergehenden Anspruch, **dadurch gekennzeichnet, dass** die Abdeckplatte (8) aus einem biokompatiblen Material hergestellt ist, vorzugsweise polymer und zur Unterstützung des Mooswachstums geeignet.

4. Bausatz (1) nach Anspruch 2, **dadurch gekennzeichnet, dass** er mindestens ein Pflanzgefäß (10) umfasst, das an der Abdeckplatte (8) befestigbar ist.

5. Bausatz (1) nach einem der vorhergehenden Ansprüche, **dadurch gekennzeichnet, dass** er mindestens ein Zufuhrrohr (5) und ein Drainagerohr (6) umfasst, die jeweils in den Zufuhrkanal (3) bzw. den Drainagekanal (4) einführbar sind, wobei das Zufuhrrohr (5) in Fluidverbindung mit einer Wasserquelle verbindbar ist.

6. Bausatz (1) nach dem vorhergehenden Anspruch, **dadurch gekennzeichnet, dass** das Drainagerohr (6) in Fluidverbindung mit dem Zufuhrrohr (5) steht, um das von den Pflanzen abgeleitete Wasser in das Zufuhrrohr (5) zurückzuführen.

## Revendications

1. Kit (1) pour fixer une plante à un mur, comprenant un panneau de support (2) fixable à un mur et configuré pour supporter une plante ; au moins un canal d'alimentation (3) et un canal de drainage (4) à l'intérieur dudit panneau de support (2) et aptes à loger respectivement un tuyau d'alimentation (5) et un tuyau de drainage (6), lesdits canaux (3, 4) étant au moins partiellement distincts l'un de l'autre ; **caractérisé en ce que** le canal d'alimentation (3) comprend une branche d'alimentation (3b), qui est configurée pour être associée à au moins un vase (10) ; le canal de drainage (4) comprenant au moins une branche de drainage (4b) qui est configurée pour être associée à un vase (10) respectif.

2. Kit (1) selon la revendication précédente, **caractérisé en ce qu'**il comprend un panneau de recouvrement (8) apte à recevoir et supporter une plante, ledit panneau de recouvrement (8) étant fixable audit panneau de support (2) ; le panneau de support (2) ayant une surface arrière (2a) connectable à un mur et une surface avant (2b) opposée à ladite surface arrière (2a), ledit panneau de recouvrement (8) étant apte à supporter ladite plante et placé pour couvrir ladite surface avant (2b).

3. Kit (1) selon la revendication précédente, **caractérisé en ce que** ledit panneau de recouvrement (8) est réalisé en matériau biocompatible, de préférence polymère et apte à supporter la croissance de mousse.

4. Kit (1) selon la revendication 2, **caractérisé en ce qu'**il comprend au moins un vase (10) fixable audit panneau de recouvrement (8).

5. Kit (1) selon l'une quelconque des revendications précédentes, **caractérisé en ce qu'**il comprend au moins un tuyau d'alimentation (5) et un tuyau de drainage (6) respectivement insérables à l'intérieur du canal d'alimentation (3) et du canal de drainage (4) respectivement, ledit tuyau d'alimentation (5) étant connectable en communication fluidique avec une source d'eau.

6. Kit (1) selon la revendication précédente, **caractérisé en ce que** le tuyau de drainage (6) est en communication fluidique avec le tuyau d'alimentation (5) pour réintroduire l'eau drainée par lesdites plantes dans ledit tuyau d'alimentation (5).
